# EUROPÄISCHE PATENTSCHRIFT

(11) **EP 3 626 964 B1**
(45) Veröffentlichungstag und Bekanntmachung des Hinweises auf die Patenterteilung: **30.11.2022**
(21) Anmeldenummer: 18195085.8
(22) Anmeldetag: 18.09.2018
(51) Int. Cl.: F03D 13/40

(54) **MODULARES HALTESYSTEM FÜR DEN TRANSPORT EINES ROTORBLATTS EINER WINDENERGIEANLAGE SOWIE TRANSPORTRAHMEN**
MODULAR RETAINING SYSTEM FOR TRANSPORTING A ROTOR BLADE OF A WIND TURBINE AND TRANSPORT FRAME
SYSTÈME DE MAINTIEN MODULAIRE POUR LE TRANSPORT D'UNE PALE DE ROTOR D'UNE ÉOLIENNE AINSI QUE CADRE DE TRANSPORT

(43) Veröffentlichungstag der Anmeldung: 25.03.2020
(73) Patentinhaber: Nordex Energy SE & Co. KG, 22419 Hamburg (DE); United Engineering Solutions GmbH & Co. KG, 20457 Hamburg (DE)
(72) Erfinder: Heck, Thomas, 21635 Jork (DE)
(74) Vertreter: Epping - Hermann - Fischer

(56) Entgegenhaltungen:
- EP-A1- 2 418 376
- EP-A2- 2 628 945
- US-B1- 9 790 927

## Beschreibung

Die Erfindung betrifft ein modulares Haltesystem für den Transport eines Rotorblatts einer Windenergieanlage. Darüber hinaus betrifft die Erfindung einen Transportrahmen zum Transport eines Rotorblatts einer Windenergieanlage.

Windenergieanlagen werden verwendet, um Energie des Windes in elektrische Energie umzuwandeln. Dazu weisen sie herkömmlich ein oder mehrere Rotorblätter (Windenergieanlagenrotorblätter) auf. Typischerweise bedingt der Transport von Rotorblättern von der Produktionsstätte zum Standort der Windenergieanlage beziehungsweise des Windkraftwerkes mehrere Transportschritte. Regelmäßig werden Rotorblätter zunächst auf dem Land mittels eines Transportfahrzeuges, insbesondere eines Lkws, dann mittels eines Transportschiffes auf dem Wasser und letztlich wieder per Lkw zum Standort der Windkraftanlage transportiert. Bei diesen Transportschritten ist zudem ein Umladen bei einem Wechsel zwischen den verschiedenen Transportarten erforderlich.

EP 2 628 945 A2 betrifft eine Transporthalterung zum Transportieren eines Rotorblatts, wobei die Transporthalterung so eingerichtet ist, dass darauf eine benachbarte Transporthalterung gestapelt werden kann, wobei die Transporthalterung einen ersten Rahmen und einen zweiten Rahmen umfasst.

EP 2 418 376 A1 betrifft ein Transport- und Lagersystem für ein Rotorblatt einer Windkraftanlage.

US 9 790 927 B1 betrifft ein System zum Transportieren eines länglichen Elements mit einem Fußende und einem entlang seiner Länge angeordneten Stützbereich unter Verwendung eines ersten, mit einem zweiten Triebwagen gekoppelten Triebwagen.

Eine Aufgabe, die der vorliegenden Erfindung zugrunde liegt, ist es, ein Konzept anzugeben, welches zu einem verbesserten Transport beziehungsweise einer verbesserten Handhabung von Windenergieanlagenrotorblättern beiträgt.

Gemäß einem Aspekt wird ein modulares Haltesystem für den Transport eines Rotorblatts einer Windenergieanlage offenbart. Das modulare Haltesystem weist einen Transportrahmen zum Halten des Rotorblatts auf, der direkt mit einem Rotorblattanschluss des Rotorblatts verbindbar ist. Der Transportrahmen ist ausgebildet an einem Transportfahrzeug befestigt zu werden, insbesondere an einem Lkw, so dass das an den Transportrahmen montierte Rotorblatt mittels des Transportfahrzeugs transportierbar ist. Das modulare Haltesystem weist weiterhin ein Rahmengestell auf, welches für den Transport des Rotorblatts auf einem Transportschiff ausgebildet ist. Der Transportrahmen ist in dem Rahmengestell aufnehmbar, so dass das an den Transportrahmen montierte Rotorblatt mittels des Transportschiffs in gestapelter Form transportierbar ist. Der Transportrahmen weist einen oberen horizontalen Abschnitt, der Montagemittel zum Verbinden mit einer oberen Hälfte des Rotorblattanschlusses aufweist, und einen unteren horizontalen Abschnitt auf, der Montagemittel zum Verbinden mit einer unteren Hälfte des Rotorblattanschlusses aufweist, wobei die Montagemittel ausgebildet sind, lediglich in einem Teilbereich der jeweiligen Hälfte mit dem Rotorblattanschluss verbunden zu werden. Die Montagemittel des oberen und unteren horizontalen Abschnitts sind kammartig ausgebildet und in einem bestimmungsgemäßen Gebrauch nach oben hin geöffnet, so dass an dem Rotorblattanschluss angeordnete Transportbolzen oder Blattbolzen aufnehmbar sind.

Das modulare Haltesystem ermöglicht es, ein Rotorblatt sowohl auf Land als auch auf hoher See einfach und effizient zu transportieren. Für den Transport mittels eines Transportfahrzeuges (Land-Transportfahrzeug) reicht der Transportrahmen aus, während für den Seetransport der Transportrahmen mit daran montiertem Rotorblatt in das Rahmengestell eingesetzt und darin befestigt werden kann. Dabei ist es nicht notwendig, für den Seetransport den Transportrahmen abzumontieren. Folglich ist es auch nicht notwendig das Rotorblatt für den Seetransport aufwendig direkt an ein anderes Gestell beziehungsweise an eine andere Halterung zu montieren. Lediglich eine sichere mechanische Verbindung zwischen dem Transportrahmen und dem Rahmengestell ist von Nöten. Durch dieses zweiteilige Lagerungskonzept wird somit erheblich zu einem vereinfachten Transport von Rotorblättern beigetragen. Insbesondere kann beim Umladen von einem Transportmittel auf das andere erheblich Zeit eingespart werden. Zudem kann der Transportrahmen für den Landtransport besonders kompakt und dünn ausgestaltet sein, während das Rahmengestell wiederum an die Gegebenheiten des Seetransports angepasst ist, welche maßgeblich eine Stapelbarkeit bedingt.

Der Transportrahmen ist in das Rahmengestell einsetzbar und darin festlegbar. Für das Festlegen bieten sich verschiedene mechanische Möglichkeiten wie beispielsweise formschlüssige und/oder kraftschlüssige Verbindungen an. Im eingesetzten Zustand ist der Transportrahmen mechanisch sicher an dem Rahmengestell festlegbar, so dass sich dieser bestimmungsgemäß nicht vom Rahmengestell lösen kann. Das Rahmengestell bildet beispielsweise einen Aufnahmeraum für den Transportrahmen aus, wobei das Rahmengestell insbesondere nach oben hin offen für die Aufnahme des Transportrahmens ausgebildet ist. Das Rahmengestell umgibt den Transportrahmen im aufgenommenen Zustand somit zumindest teilweise, insbesondere von einer Unterseite und den Lateralseiten.

Die Befestigungsmittel sind als Befestigungsöffnungen ausgebildet, die in einem bestimmungsgemäßen Gebrauch an der Unterseite des Transportrahmens ausgebildet sind. Die Befestigungsöffnungen sind eingerichtet, korrespondierende Montagemittel des Transportfahrzeugs oder des Rahmengestells für eine formschlüssige Montage aufzunehmen. Bei den Öffnungen handelt es sich beispielsweise um sogenannten Twistlock-Öffnungen. Auch derartige Befestigungsmittel erlauben eine einfache Montage des Transportrahmens am Rahmengestell beziehungsweise am Transportfahrzeug. Weiterhin wird dazu beigetragen, dass der Transportrahmen besonders breit ausgeführt werden kann, zumindest in einem unteren Abschnitt, mit welchem er auf dem Transportfahrzeug, einem Träger dessen beziehungsweise in oder an dem Rahmengestell gelagert ist, so dass eine besonders effiziente Lagerung und Abstützung des Transportrahmens erreichbar ist.

Die Montagemittel des oberen und unteren horizontalen Abschnitts sind kammartig ausgebildet und in einem bestimmungsgemäßen Gebrauch nach oben hin geöffnet, so dass an dem Rotorblattanschluss angeordnete Transportbolzen bzw. Blattbolzen in den Montagemitteln aufnehmbar sind. Somit kann das Rotorblatt mit den im Rotorblattanschluss montierten Transportbolzen bzw. Blattbolzen leicht in die Montagemittel, die kammartig ausgebildet sind, eingehoben beziehungsweise bei einer Demontage herausgenommen werden. Insbesondere sind die Montagemittel auch im oberen horizontalen Abschnitt kammartig ausgebildet. Dadurch müssen die Transportbolzen bzw.

Blattbolzen für die Befestigung des Rotorblattes an dem Transportrahmen zumindest nicht vollständig aus dem Rotorblattanschluss entfernt werden. Zudem dienen die kammartigen Montagemittel als Positionierungshilfe für das Rotorblatt beim Einsetzen in den Transportrahmen.

Gemäß einer Ausführungsform ist das Rahmengestell durch mehrere Rahmenelemente kastenförmig ausgebildet und der Transportrahmen ist durch mehrere Rahmenelemente, die im Wesentlichen in einer Ebene angeordnet sind, ausgebildet. Dadurch hat der Transportrahmen eine deutlich geringere Bautiefe als das Rahmengestell. Der Transportrahmen erstreckt sich im Wesentlichen in einer Ebene und hat eine Bautiefe, die im Wesentlichen lediglich durch das Profil der Rahmenelemente bestimmt ist. Mit anderen Worten ausgedrückt handelt es sich bei dem Rahmengestell um einen "3D-Rahmen", während es sich bei dem Transportrahmen im Wesentlichen um einen "2D-Rahmen" handelt. Der Transportrahmen ermöglicht somit eine leichte und kompakte Bauweise, die ideal für den Landtransport mittels des Transportfahrzeugs geeignet ist. Das Rahmengestell ermöglicht eine besonders stabile Konstruktion, die zudem für eine Stapelbarkeit mehrerer solcher Rahmengestelle ausgebildet sein kann. Somit eignet sich das Rahmengestell besonders für den Seetransport.

Gemäß einer Ausführungsform weisen das Rahmengestell und der Transportrahmen im Wesentlichen eine gleiche Bauhöhe auf. Die Bauhöhe ist bezogen auf einen bestimmungsgemäßen Gebrauch der Rahmen, das heißt beim Transport eines Rotorblatts. Beispielsweise entspricht die Bauhöhe mindestens einem Durchmesser des Rotorblattanschlusses des Rotorblatts, so dass eine besonders stabile Lagerung des Rotorblatts ermöglicht ist. Zudem ist auch eine stabile Lagerung des Transportrahmens im Rahmengestell ermöglicht.

Gemäß einer Ausführungsform weist der Transportrahmen Befestigungsmittel auf, die ausgebildet sind für die Befestigung des Transportrahmens an dem Transportfahrzeug sowie für die Befestigung des Transportrahmens an dem Rahmengestell. Die Befestigungsmittel können auch als Arretierungsmittel bezeichnet werden. Durch die beschriebene Ausbildung sind die Befestigungsmittel als eine zentrale Aufnahme- beziehungsweise Montagestelle ausgebildet, so dass sämtliche Gestelle beziehungsweise Transporthalterungen mit dem Transportrahmen verbindbar sind.

Gemäß einer Ausführungsform sind die Befestigungsmittel als gegenüberliegende, seitlich abstehende Bolzen ausgebildet, die in zu den Bolzen korrespondierende zylinderförmige Aufnahmemittel des Rahmengestells, die in einem bestimmungsgemäßen Gebrauch nach oben geöffnet sind, einsetzbar sind. Durch derartig ausgebildete Befestigungsmittel ist ein einfaches Einführen und Einsetzen des Transportrahmens in das Rahmengestell beziehungsweise in eine entsprechende Halterung eines Land-Transportfahrzeugs, ermöglicht. Der Transportrahmen, insbesondere mit daran montiertem Rotorblatt, kann auf einfache Art und Weise von oben in das Rahmengestell eingeführt werden. Des Weiteren ermöglichen die seitlich abstehenden Bolzen und die zylinderförmigen Aufnahmemittel eine bewegliche Lagerung, wobei insbesondere eine Neigungskompensation realisierbar ist. Mit anderen Worten kann der Transportrahmen in aufgenommenem Zustand um eine durch die Bolzen verlaufende Deckelachse leicht verkippt werden. Bei der beschriebenen Ausführungsform mit Bolzen bedingt die Paarung konkav/konvex (Bolzen zu Aufnahme) ein minimales Spiel bei gleichzeitig leichter Montierbarkeit.

Gemäß einer Ausführungsform weist der Transportrahmen einen oberen horizontalen Abschnitt, der Montagemittel zum Verbinden mit einer oberen Hälfte des Rotorblattanschlusses aufweist, und einen unteren horizontalen Abschnitt auf, der Montagemittel zum Verbinden mit einer unteren Hälfte des Rotorblattanschlusses aufweist. Die Montagemittel sind jeweils ausgebildet, lediglich in einem Teilbereich der jeweiligen Hälfte mit dem Rotorblattanschluss verbunden zu werden. Insbesondere sind die Montagemittel ausgebildet, in den Rotorblattanschluss eingeschraubte Transportbolzen bzw. Blattbolzen aufzunehmen und über diese Bolzen das Rotorblatt zu halten. Durch einen solchen Transportrahmen ist das Rotorblatt in einem oberen Bereich des Rotorblattanschlusses sowie in einem unteren Bereich des Rotorblattanschlusses gelagert. Dadurch können die Gewichtskräfte des Rotorblatts besonders effizient aufgenommen werden. Dabei ist es nicht nötig, den Transportrahmen über den gesamten Umfang des Rotorblattanschlusses mit dem Rotorblatt mechanisch zu verbinden. Durch die lediglich teilweise Verbindung mit dem Rotorblattanschluss ist somit eine einfachere Montage des Rotorblatts an den Transportrahmen ermöglicht.

Gemäß einer Ausführungsform ist der Transportrahmen trapezförmig ausgebildet. Zudem sind der obere und der untere horizontale Abschnitt über zwei winklig zueinander angeordnete Rahmenschenkel verbunden. Der obere horizontale Abschnitt weist eine Länge auf, die zumindest kleiner als 30 % eines Durchmessers des Rotorblattanschlusses und um mindestens einen Faktor 2 geringer im Vergleich zu dem unteren horizontalen Abschnitt ist. Dies trägt dazu bei, dass die beiden Rahmenschenkel größtenteils innerhalb einer durch den Rotorblattanschluss definierten Flanschfläche verlaufen. Dadurch kreuzen die Rahmenschenkel nicht oder nur in geringem Maße bereits am Rotorblattanschluss installierte Blattbolzen, die für eine spätere Montage des Rotorblatts an der Windenergieanlage vormontiert sind. Für den Transport müssen somit kaum oder keine solcher Blattbolzen abmontiert werden.

Gemäß einer Ausführungsform sind die Rahmenschenkel bezüglich einer durch den Mittelpunkt des Rotorblattanschlusses verlaufenden vertikalen Ebene asymmetrisch angeordnet. Die vertikale Ebene bezieht sich auf einen bestimmungsgemäßen Gebrauch und montierten Zustand des Halterahmens am Rotorblatt. Durch die asymmetrische Anordnung der Rahmenschenkel ist eine an den Schwerpunkt eines Rotorblatts angepasste Lagerung gewährleistet. Bezogen auf eine durch den Rotorblattanschluss gebildete Flanschfläche (insb. eine durch die Blattbolzen definierte Kreisfläche) des Rotorblattanschlusses ist der tatsächliche Schwerpunkt des Rotorblatts exzentrisch bezüglich des Mittelpunkts des Rotorblattanschlusses bzw. der Flanschfläche. Auftretende Momente bei der Lagerung bzw. beim Transport des Rotorblatts können somit besser kompensiert werden. Mit anderen Worten ist die Aufstandsfläche derart verschoben, dass der Schwerpunkt zentraler zwischen den beiden Kipppunkten liegt.

Gemäß einer Ausführungsform sind die Montagemittel des unteren horizontalen Abschnitts bezogen auf eine durch den Mittelpunkt des Rotorblattanschlusses verlaufende vertikale Ebene asymmetrisch angeordnet. Dadurch werden im Wesentlichen die vorgenannten Vorteile und Funktionen erreicht. Der untere horizontale Abschnitt ist somit ebenfalls an den Schwerpunkt des Rotorblatts angepasst und ermöglicht eine besonders effektive Lagerung. Die Montagemittel des oberen horizontalen Abschnitts befinden sich im Wesentlichen in einem Bereich, der die durch den Mittelpunkt des Rotorblattanschlusses verlaufende vertikale Ebene schneidet.

Gemäß einer Ausführungsform ist das Rahmengestell stapelbar ausgebildet, um mit einem weiteren solchen Rahmengestell gestapelt angeordnet zu werden. Das Rahmengestell weist beispielsweise Stapelmittel auf, wie etwa Öffnungen und Bolzen, sodass ein formschlüssiges Stapeln mit einem weiteren Rahmengestell ermöglicht ist. Zusätzlich kann die Verbindung zum Stapeln über Spannelemente erfolgen, welche ein Spiel in vertikaler Richtung eliminieren.

Gemäß einem weiteren Aspekt wird ein Transportrahmen für ein Rotorblatt einer Windenergieanlage offenbart. Der Transportrahmen ist zum Halten eines Rotorblatts einer Windenergieanlage ausgebildet. Der Transportrahmen ist direkt mit einem Rotorblattanschluss des Rotorblatts verbindbar. Der Transportrahmen ist ausgebildet, an einem Transportfahrzeug, insbesondere an einem Lkw, befestigt zu werden, sodass das an dem Transportrahmen montierte Rotorblatt mittels des Transportfahrzeugs transportierbar ist. Der Transportrahmen weist einen oberen horizontalen Abschnitt, der Montagemittel zum Verbinden mit einer oberen Hälfte des Rotorblattanschlusses aufweist, und einen unteren horizontalen Abschnitt auf, der Montagemittel zum Verbinden mit einer unteren Hälfte des Rotorblattanschlusses aufweist. Die Montagemittel sind ausgebildet, lediglich in einem Teilbereich der jeweiligen Hälfte mit dem Rotorblattanschluss verbunden zu werden. Die Montagemittel des oberen und unteren horizontalen Abschnitts sind kammartig ausgebildet und in einem bestimmungsgemäßen Gebrauch nach oben hin geöffnet, so dass an dem Rotorblattanschluss angeordnete Transportbolzen oder Blattbolzen aufnehmbar sind. Der Transportrahmen ist trapezförmig ausgebildet. Zudem sind der obere und der untere horizontale Abschnitt über zwei winklig zueinander angeordnete Rahmenschenkel verbunden. Der obere horizontale Abschnitt weist eine Länge auf, die kleiner als 30 % eines Durchmessers des Rotorblattanschlusses und um mindestens einen Faktor 2 geringer im Vergleich zu dem unteren horizontalen Abschnitt ist. Dadurch ergeben sich die oben genannten Vorteile und Funktionen.

Der Transportrahmen ermöglicht im Wesentlichen die oben genannten Vorteile und Funktionen. Insbesondere ermöglicht der Transportrahmen eine kompakte und leichte Bauweise, die einen effektiven Transport des Rotorblatts mit einem Transportfahrzeug ermöglicht. Insbesondere können Kräfte des Rotorblattes dadurch wirksam aufgenommen werden, dass der Transportrahmen in der oberen Hälfte und der unteren Hälfte mit dem Rotorblattanschluss verbunden ist, wobei wie bereits oben erläutert nur eine teilweise Verbindung in der jeweiligen Hälfte mit dem Rotorblattanschluss vorgesehen ist.

Gemäß einer weiteren Ausführungsform ist der Transportrahmen für die Verwendung mit einem modularen Haltesystem gemäß dem ersten Aspekt ausgebildet.

Weitere Vorteile, Merkmale und Weiterbildungen ergeben sich aus der nachfolgenden, in Verbindung mit den Figuren erläuterten Beschreibung von Ausführungsbeispielen. Gleiche, gleichartige oder gleich wirkende Elemente können in den Figuren mit den gleichen Bezugszeichen versehen sein.

In den Figuren zeigen:
Figur 1 eine schematische Darstellung einer Windenergieanlage,
Figur 2 eine schematische Darstellung eines Rotorblatts der Windenergieanlage,
Figur 3 eine perspektivische, schematische Ansicht eines Rotorblatts mit einem Transportrahmen gemäß einem Ausführungsbeispiel der Erfindung,
Figur 4 eine schematische Aufsicht auf den Rotorblattanschluss des Rotorblatts mit dem daran montierten Transportrahmen,
Figur 5 eine perspektivische, schematische Teilansicht des Rotorblatts gemäß Figuren 3 und 4 mit dem in ein Rahmengestell eingesetzten Transportrahmen,
Figur 6 einen Transportrahmen gemäß einem weiteren Ausführungsbeispiel in einer perspektivischen, schematischen Ansicht,
Figur 7 eine schematische Seitenansicht des Transportrahmens gemäß Figur 6 und
Figur 8 eine perspektivische, schematische Ansicht eines Rotorblatts mit montiertem Transportrahmen gemäß Figuren 6 und 7.

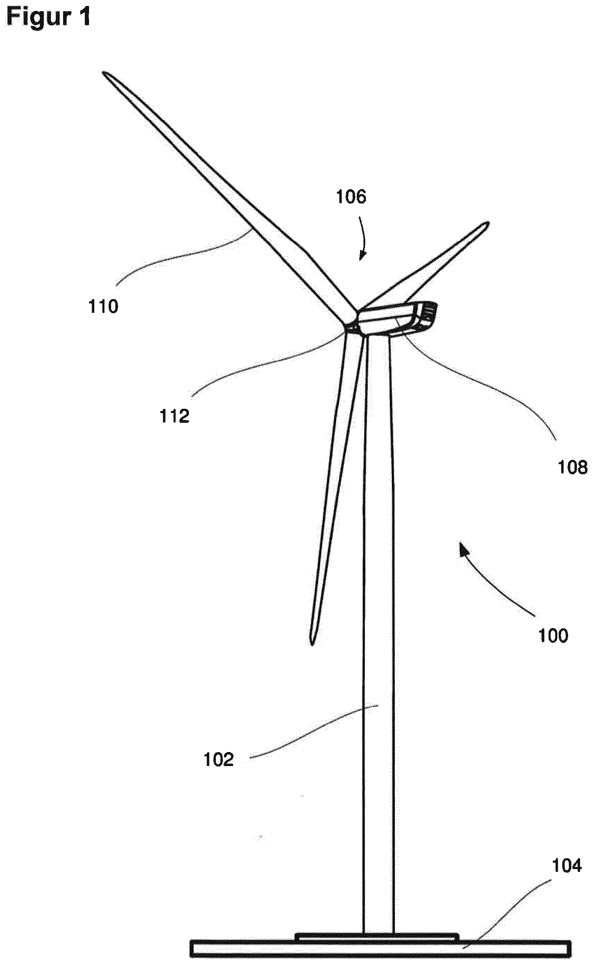

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

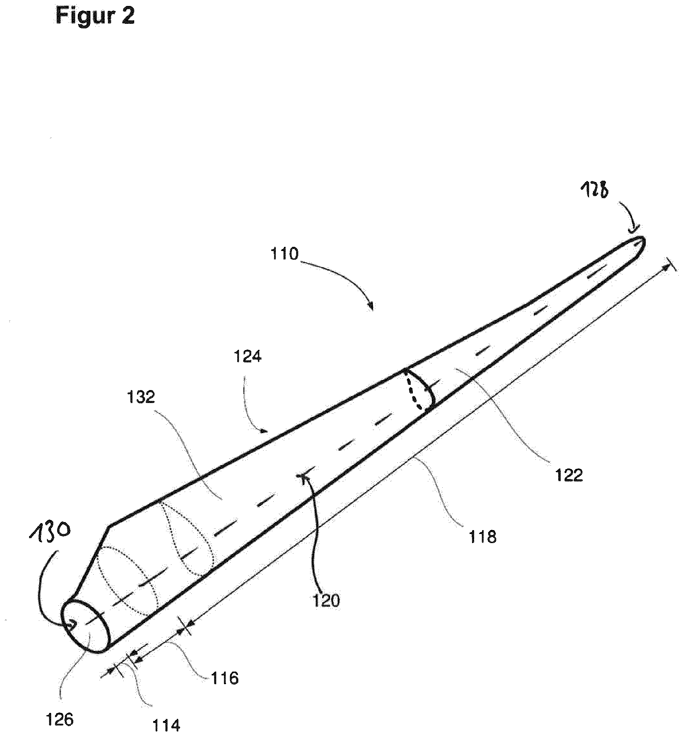

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat eine Längsachse 120 sowie eine Druckseite 122 und eine gegenüberliegende Saugseite 124. Das Rotorblatt 110 ist im Inneren im Wesentlichen hohl ausgebildet. Das Rotorblatt 110 hat ein blattwurzelseitiges Ende 126 und ein blattspitzenseitiges Ende 128.

Am blattwurzelseitigen Ende 126 des Rotorblattwurzelbereiches 114 ist ein Rotorblattanschluss 130 vorgesehen, mittels welchem das Rotorblatt 110 mit der Rotornabe 112 mechanisch verbunden wird. Der Rotorblattanschluss 130 ist als ein Flansch ausgebildet, der eine Vielzahl von im Laminat ring- oder kreisförmig angeordneten Lagerhülsen aufweist, in welche Blattbolzen eingeschraubt werden (in Figur 2 nicht gezeigt).

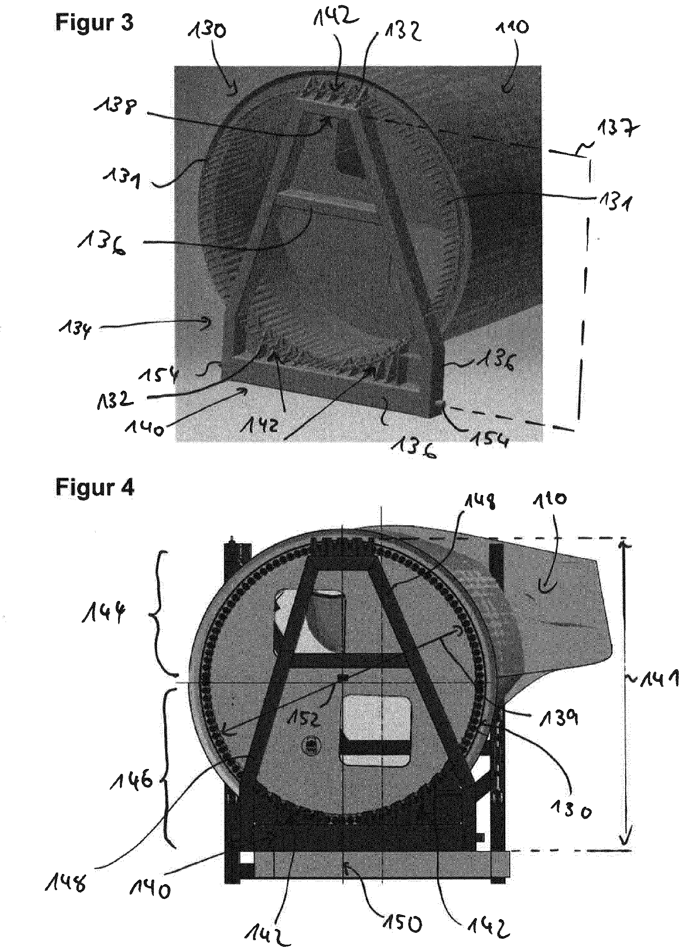

Figur 3 zeigt einen Ausschnitt eines Rotorblatts 110 in einer perspektivischen Ansicht, in welcher der Rotorblattanschluss 130 dargestellt ist. Der Rotorblattanschluss 130 weist eine Vielzahl von kreisförmig angeordneten Lagerhülsen auf, in welche Blattbolzen 131 bzw. Transportbolzen 132 eingeschraubt sind (aus Gründen der Übersichtlichkeit sind nur einzelne Blattbolzen 131 bzw. Transportbolzen 132 mit Bezugszeichen versehen). Bei den Blattbolzen 131 handelt es sich beispielsweise um solche Bolzen, die für die endgültige Verbindung des Rotorblatts 110 mit der Rotornabe bestimmt sind. Bei den Transportbolzen 132 handelt es sich beispielsweise um solche Bolzen, die lediglich dem Transport dienen und für die endgültige Verbindung des Rotorblatts 110 mit der Rotornabe ausgetauscht werden. In Figur 3 ist weiterhin ein Transportrahmen 134 dargestellt, der über den Rotorblattanschluss 130 mit dem Rotorblatt 110 mechanisch verbunden ist. Der Transportrahmen 134 wird im Folgenden anhand von Figuren 3 bis 5 genauer erläutert.

Der Transportrahmen 134 ist durch mehrere Rahmenelemente 136 (wiederum sind nicht sämtliche Rahmenelemente aus Gründen der Übersichtlichkeit mit Bezugszeichen versehen) ausgebildet, die im Wesentlichen in einer Ebene 137 angeordnet sind. Es handelt sich um einen sogenannten zweidimensionalen Rahmen, der dadurch besonders kompakt und vergleichsweise leicht ausgebildet ist. Der im Wesentlichen trapezförmig ausgebildete Transportrahmen 134 weist einen oberen horizontalen Abschnitt 138 sowie einen unteren horizontalen Abschnitt 140 auf. Der obere horizontale Abschnitt 138 sowie der untere horizontale Abschnitt 140 weisen jeweils Montagemittel 142 auf, die kammartig ausgebildet sind und nach oben hin geöffnet sind. Die Montagemittel 142 dienen dem Verbinden des Transportrahmens 134 einer oberen Hälfte 144 des Rotorblattanschlusses 130, während die Montagemittel 142 des unteren horizontalen Abschnitts 140 dem Verbinden des Transportrahmens 134 mit einer unteren Hälfte 146 des Rotorblattanschlusses 130 dienen (siehe schematische Seitenansicht der Figur 4). Durch die kammartige Ausbildung der Montagemittel 142 können diese die in dem Rotorblattanschluss 130 eingeschraubten Transportbolzen 132 formschlüssig aufnehmen, in dem das Rotorblatt 110 von oben in den Transportrahmen 134 eingesetzt wird. Wie insbesondere anhand der Figuren 3 und 4 zu erkennen ist, sind die Montagemittel 142 so ausgebildet, dass lediglich ein Teilbereich der jeweiligen Hälfte 144 beziehungsweise 146 des Rotorblattanschlusses mit dem Transportrahmen 134 verbunden wird. In diesen Teilbereichen sind die Transportbolzen 132 vorgesehen. In den nicht benötigten Teilbereichen können somit bereits in der Fertigungsstätte die Blattbolzen 131 für Befestigung des Rotorblattes 110 an der Nabe vormontiert werden. Es können alternativ auch ausschließlich Transportbolzen 132 oder Blattbolzen 131 vorgesehen sein.

Wie insbesondere anhand der Figur 4 zu erkennen ist, sind winklig zueinander angeordnete Rahmenschenkel 148 des trapezförmig aufgebauten Transportrahmens 134 asymmetrisch angeordnet, insbesondere bezüglich einer vertikalen Ebene 150, welche durch den Mittelpunkt 152 des Rotorblattanschlusses 130 verläuft. Darüber hinaus sind auch die Montagemittel 142 des unteren horizontalen Abschnitts 140 asymmetrisch bezüglich dieser vertikalen Ebene 150 ausgebildet. Dadurch werden die eingangs genannten Vorteile hinsichtlich des Schwerpunkts bei der Lagerung des Rotorblatts 110 erreicht.

Der Transportrahmen 134 ist ausgebildet für den Transport des Rotorblatts 110 mittels eines Land-Transportfahrzeuges, insbesondere einem Lkw. Hierzu wird der Transportrahmen 134 mechanisch mit dem Lkw verbunden. Dies geschieht beispielsweise mittels der im unteren Bereich des Rahmens 134 ausgebildeten, seitlich abstehenden Bolzens 154. Die Bolzen 154 können in entsprechende Aufnahmeöffnungen des Lkws bzw. eines Trägers des Lkws eingeführt werden (nicht gezeigt). Anschließend kann der Transportrahmen 134 zusätzlich mechanisch gesichert werden.

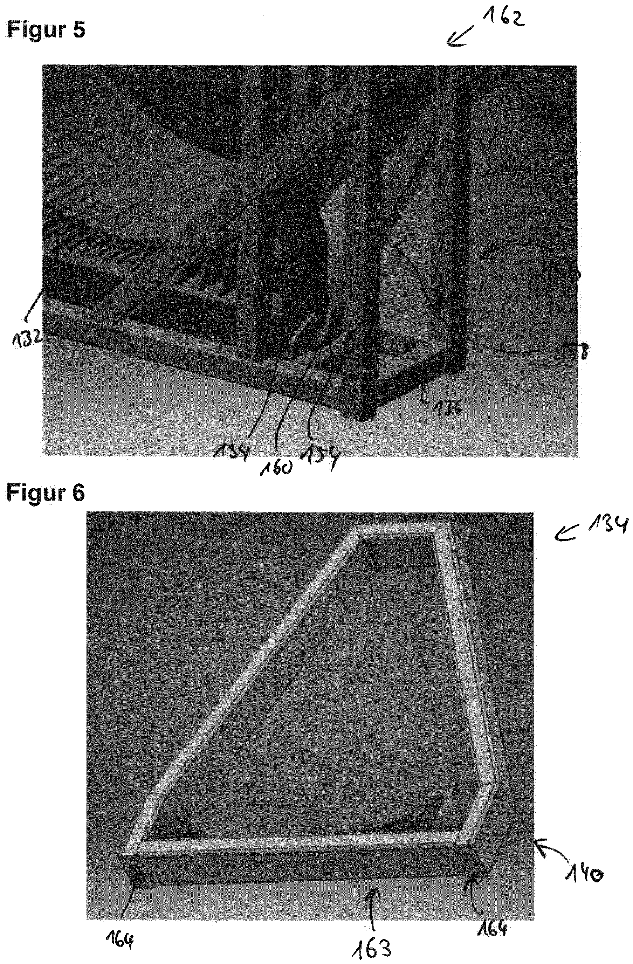

Weiterhin bietet der Transportrahmen 134 die Möglichkeit, in ein korrespondierendes Rahmengestell 156 eingesetzt zu werden, welches in Figur 5 gezeigt ist. Das Rahmengestell 156 ist durch mehrere Rahmenelemente 136 kastenförmig ausgebildet, sodass dieses auch als 3D-Rahmengestell bezeichnet werden kann. Die Rahmenelemente 136 entsprechen vom Profil her denjenigen des Transportrahmens 134, können jedoch auch ein anderes Profil haben. Das Rahmengestell 156 ist für einen Transport mittels eines Transportschiffs ausgebildet. Das Rahmengestell 156 bildet einen Aufnahmeraum 158, in welchen von oben der Transportrahmen mit dem daran montierten Rotorblatt 110 eingesetzt wird. Dabei greifen die seitlich abstehenden Bolzen 154 in entsprechende, nach oben hin geöffnete zylinderförmige Aufnahmemittel 160. Mit anderen Worten kann der Transportrahmen 134 leicht und einfach in das Rahmengestell 156 eingesetzt und daran befestigt werden.

Der Transportrahmen 134 und das Rahmengestell 156 bilden zusammen ein modulares Haltesystem 162 für den Transport eines Rotorblatts 110. Dabei kann mittels des kompakt und leicht ausgebildeten Transportrahmens 134 das Rotorblatt 110 über Land transportiert werden, wobei das Rotorblatt 110 zusammen mit dem Transportrahmen 134 in das Rahmengestell 156 für den Seetransport eingesetzt wird. Es ist dabei nicht notwendig, den Transportrahmen 134 vor dem Transport mittels des Transportschiffes vom Rotorblatt 110 abzumontieren, um dieses dann an einem Rahmengestell für den Seetransport zu befestigen.

Ein weiterer Vorteil ergibt sich durch die trapezförmige Ausgestaltung, wie in Figuren 3 und 4 gezeigt. Die Form des Transportrahmens wird als im Wesentlichen trapezförmig angenommen, auch wenn sie in der dargestellten Ausführungsform bei genauer Betrachtung eine sechseckige Ausbildung hat. Beispielsweise ist zumindest der Teil des Rahmens, der den Rotorblattanschluss 130 überdeckt, trapezartig. Dadurch, dass die Rahmenschenkel 148 winklig zueinander angeordnet sind, und der obere horizontale Abschnitt in seiner Länge deutlich kleiner als der untere horizontale Abschnitt 140 ausgebildet ist, verlaufen die Rahmenschenkel 148 weitestgehend innerhalb der durch die Blattbolzen 131 aufgespannten Kreisfläche. Insbesondere ist der obere horizontale Abschnitt 138 kleiner als 30% eines Durchmessers 139 des Rotorblattanschlusses 130. Deshalb ist es nicht notwendig, eine Vielzahl der Blattbolzen 131 für den Transport des Rotorblatts 110 zu entfernen. Vielmehr können diese schon bei der Herstellung vormontiert werden und während des gesamten Transports zur Windenergieanlage oder zu einem Windkraftwerk im Flanschanschluss verbleiben. Zudem weist der Transportrahmen 134 eine in etwa gleich Bauhöhe 141 im Vergleich zu dem Rahmengestell 156 auf.

Es sei noch darauf hingewiesen, dass das Rahmengestell 156 stapelbar ausgebildet ist, um mit mehreren solcher Rahmengestelle 156 nach oben und zur Seite hin gestapelt werden zu können.

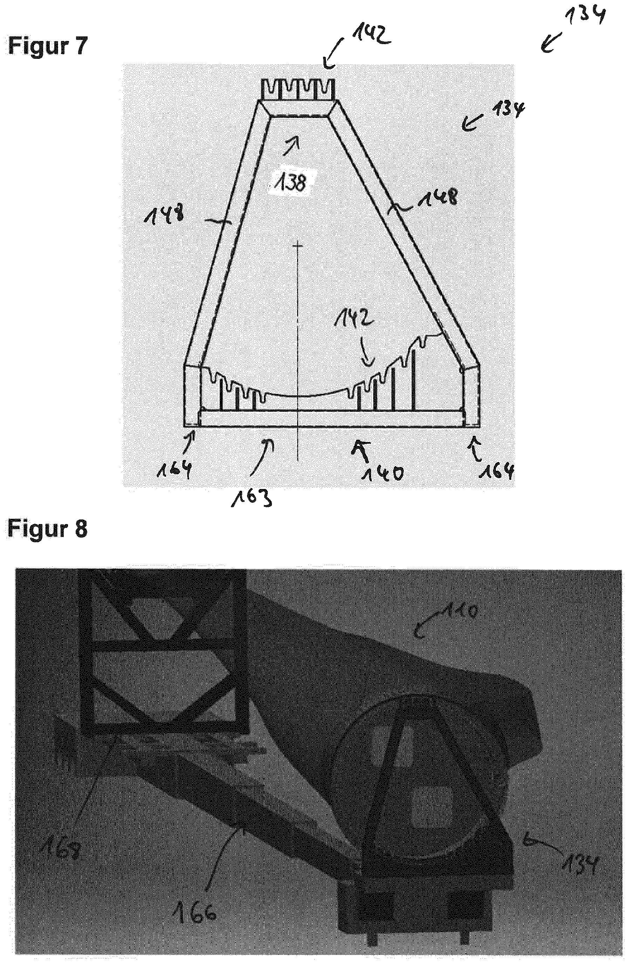

Figuren 6 bis 8 betreffen ein weiteres Ausführungsbeispiel der Erfindung eines Transportrahmens 134. Figuren 6 und 7 zeigen eine perspektivische Ansicht und eine schematische Seitenansicht des Transportrahmens 134, während Figur 8 den Transportrahmen 134 in einem montierten Zustand an einem Rotorblatt 110 zeigt.

Im Wesentlichen ist der Transportrahmen 134 gemäß dem weiteren Ausführungsbeispiel analog zu dem zuvor beschriebenen Transportrahmen 134 ausgebildet, sodass nur mehr auf Unterschiede eingegangen wird.

Im Wesentlichen unterscheidet sich der Transportrahmen 134 gemäß Figuren 6 bis 8 dahingehend, dass keine seitlichen Bolzen 154 vorgesehen sind, sondern, wie insbesondere anhand der Figur 6 zu erkennen ist, an einer Unterseite 163 an gegenüberliegenden Seiten Befestigungsöffnungen 164 als Befestigungsmittel vorgesehen sind. Die Befestigungsöffnungen 164 sind als sogenannte Twistlock-Öffnungen ausgeführt und dienen analog zu dem Bolzen 154 einer formschlüssigen Montage mit entsprechenden korrespondierenden Montagemitteln des Transportfahrzeugs beziehungsweise eines Rahmengestells 156. Der Rahmen 134 gemäß dem weiteren Ausführungsbeispiel ist analog zu oben für den Landtransport mittels eines Lkws ausgebildet, ist aber gleichermaßen in ein entsprechendes Rahmengestell 156 einsetzbar, sodass das Rotorblatt 110 mittels des Transportrahmens 134 auf einfache Art und Weise mit einem Schiff transportiert werden kann.

Figur 8 zeigt einen Transportaufbau, bei welchem der Transportrahmen 134 des weiteren Ausführungsbeispiels im Einsatz ist. Der Transportrahmen 134 ist an dem Rotorblatt 110 montiert. Zudem ist der Transportrahmen 134 auf einem Rotorblattträger 166 mit Hilfe der Befestigungsöffnungen 164 montiert. Im Bereich des spitzenseitigen Endes ist ein zusätzlicher Halteträger 168 vorgesehen, welcher das Rotorblatt 110 spitzenseitig abstützt.

### BEZUGSZEICHENLISTE

- 100: Windenergieanlage
- 102: Turm
- 104: Fundament
- 106: Gondel
- 108: Rotor
- 110: Rotorblatt
- 112: Rotornabe
- 114: Rotorblattwurzelbereich
- 116: Übergangsbereich
- 118: Profilbereich
- 120: Längsachse
- 122: Druckseite
- 124: Saugseite
- 126: blattwurzelseitiges Ende
- 128: blattspitzenseitiges Ende
- 130: Rotorblattanschluss
- 131: Blattbolzen
- 132: Transportbolzen
- 134: Transportrahmen
- 136: Rahmenelemente
- 137: Ebene
- 138: Abschnitt
- 139: Durchmesser
- 140: Abschnitt
- 141: Bauhöhe
- 142: Montagemittel
- 144: Hälfte
- 146: Hälfte
- 148: Rahmenschenkel
- 150: Ebene
- 152: Mittelpunkt
- 154: Bolzen
- 156: Rahmengestell
- 158: Aufnahmeraum
- 160: Aufnahmemittel
- 162: Haltesystem
- 163: Unterseite
- 164: Befestigungsöffnungen
- 166: Rotorblattträger
- 168: Halteträger

## Patentansprüche

1. Modulares Haltesystem (162) für den Transport eines Rotorblatts (110) einer Windenergieanlage (100), aufweisend
- einen Transportrahmen (134) zum Halten des Rotorblatts (110), der direkt mit einem Rotorblattanschluss (130) des Rotorblatts (110) verbindbar ist, wobei der Transportrahmen (134) ausgebildet ist an einem Transportfahrzeug befestigt zu werden, insbesondere an einem Lkw, so dass das an den Transportrahmen (134) montierte Rotorblatt (110) mittels des Transportfahrzeugs transportierbar ist, und
- ein Rahmengestell (156), das für den Transport des Rotorblatts (110) auf einem Transportschiff ausgebildet ist, wobei der Transportrahmen (134) in dem Rahmengestell (156) aufnehmbar ist, so dass das an den Transportrahmen (134) montierte Rotorblatt (110) mittels des Transportschiffs transportierbar ist,
wobei der Transportrahmen (134) einen oberen horizontalen Abschnitt (138), der Montagemittel (142) zum Verbinden mit einer oberen Hälfte (144) des Rotorblattanschlusses (130) aufweist, und einen unteren horizontalen Abschnitt (140) aufweist, der Montagemittel (142) zum Verbinden mit einer unteren Hälfte (146) des Rotorblattanschlusses (130) aufweist, wobei die Montagemittel (142) ausgebildet sind, lediglich in einem Teilbereich der jeweiligen Hälfte (144, 146) mit dem Rotorblattanschluss (130) verbunden zu werden, und
wobei die Montagemittel (142) des oberen und unteren horizontalen Abschnitts (138, 140) kammartig ausgebildet und in einem bestimmungsgemäßen Gebrauch nach oben hin geöffnet sind, so dass an dem Rotorblattanschluss (130) angeordnete Transportbolzen (132) oder Blattbolzen (131) aufnehmbar sind.

2. Modulares Haltesystem (162) nach Anspruch 1, wobei das Rahmengestell (156) durch mehrere Rahmenelemente (136) kastenförmig ausgebildet ist und der Transportrahmen (134) durch mehrere Rahmenelemente (136), die im Wesentlichen in einer Ebene (137) angeordnet sind, ausgebildet ist.

3. Modulares Haltesystem (162) nach Anspruch 1 oder 2, wobei das Rahmengestell (156) und der Transportrahmen (134) im Wesentlichen eine gleiche Bauhöhe (141) aufweisen.

4. Modulares Haltesystem (162) nach einem der vorhergehenden Ansprüche, wobei der Transportrahmen (134) Befestigungsmittel aufweist, die ausgebildet sind für die Befestigung des Transportrahmens (134) an dem Transportfahrzeug sowie für die Befestigung des Transportrahmens (134) an dem Rahmengestell (156).

5. Modulares Haltesystem (162) nach Anspruch 4, wobei die Befestigungsmittel als gegenüberliegende, seitlich abstehende Bolzen (154) ausgebildet sind, die in zu den Bolzen korrespondierende zylinderförmige Aufnahmemittel (160) des Rahmengestells (156), die in einem bestimmungsgemäßen Gebrauch nach oben geöffnet sind, einsetzbar sind.

6. Modulares Haltesystem (162) nach Anspruch 4, wobei die Befestigungsmittel als Befestigungsöffnungen (164) ausgebildet sind, die in einem bestimmungsgemäßen Gebrauch an der Unterseite des Transportrahmens (134) ausgebildet sind, wobei die Befestigungsöffnungen (164) eingerichtet sind, korrespondierende Montagemittel des Transportfahrzeugs oder des Rahmengestells (156) für eine formschlüssige Montage aufzunehmen.

7. Modulares Haltesystem (162) nach einem der Ansprüche 1 bis 6, wobei der Transportrahmen (134) trapezförmig ausgebildet ist sowie der obere und der untere horizontale Abschnitt (138, 140) über zwei winklig zueinander angeordnete Rahmenschenkel (148) verbunden sind, wobei der obere horizontale Abschnitt (138) eine Länge aufweist, die kleiner als 30 % eines Durchmessers (139) des Rotorblattanschlusses (130) und um mindestens einen Faktor 2 geringer im Vergleich zu dem unteren horizontalen Abschnitt (140) ist.

8. Modulares Haltesystem (162) nach Anspruch 7, wobei die Rahmenschenkel (148) bezüglich einer durch den Mittelpunkt (152) des Rotorblattanschlusses (130) verlaufenden vertikalen Ebene (150) asymmetrisch angeordnet sind.

9. Modulares Haltesystem (162) nach einem der Ansprüche 1 bis 8, wobei die Montagemittel (142) des unteren horizontalen Abschnitts (140) bezogen auf eine durch den Mittelpunkt (152) des Rotorblattanschlusses (130) verlaufende vertikale Ebene (150) asymmetrisch angeordnet sind.

10. Modulares Haltesystem (162) nach einem der vorhergehenden Ansprüche, wobei das Rahmengestell (156) stapelbar ausgebildet ist, um mit einem weiteren solchen Rahmengestell (156) gestapelt angeordnet zu werden.

11. Transportrahmen (134) für ein Rotorblatt (110), wobei der Transportrahmen (134)
- zum Halten eines Rotorblatts (110) einer Windenergieanlage (100) ausgebildet ist,
- direkt mit einem Rotorblattanschluss (130) des Rotorblatts (110) verbindbar ist,
- ausgebildet ist an einem Transportfahrzeug befestigt zu werden, insbesondere an einem Lkw, so dass das an den Transportrahmen (134) montierte Rotorblatt (110) mittels des Transportfahrzeugs transportierbar ist,
- einen oberen horizontalen Abschnitt (138), der Montagemittel (142) zum Verbinden mit einer oberen Hälfte (144) des Rotorblattanschluss (130) aufweist, und einen unteren horizontalen Abschnitt (140) aufweist, der Montagemittel (142) zum Verbinden mit einer unteren Hälfte (146) des Rotorblattanschlusses (130) aufweist, wobei die Montagemittel (142) ausgebildet sind, lediglich in einem Teilbereich der jeweiligen Hälfte (144, 146) mit dem Rotorblattanschluss (130) verbunden zu werden, und wobei die Montagemittel (142) des oberen und unteren horizontalen Abschnitts (138, 140) kammartig ausgebildet und in einem bestimmungsgemäßen Gebrauch nach oben hin geöffnet sind, so dass an dem Rotorblattanschluss (130) angeordnete Transportbolzen (132) oder Blattbolzen (131) aufnehmbar sind, und
- trapezförmig ausgebildet ist sowie der obere und der untere horizontale Abschnitt (138, 140) über zwei winklig zueinander angeordnete Rahmenschenkel (148) verbunden sind, wobei der obere horizontale Abschnitt (138) eine Länge aufweist, die kleiner als 30 % eines Durchmessers des Rotorblattanschlusses (130) und um mindestens einen Faktor 2 geringer im Vergleich zu dem unteren horizontalen Abschnitt (140) ist.

12. Transportrahmen (134) nach Anspruch 11, wobei der Transportrahmen (134) für die Verwendung in einem modularen Haltesystem (162) nach einem der Ansprüche 1 bis 10 ausgebildet ist.

## Claims

1. A modular support system (162) for transporting a rotor blade (110) of a wind turbine (100), comprising
- a transport frame (134) which is provided for supporting the rotor blade (110) and is directly connectable to a rotor blade root connection (130) of the rotor blade (110), wherein the transport frame (134) is designed to be attached to a transport vehicle, in particular a truck, so that the rotor blade (110) mounted to the transport frame (134) is transportable by means of the transport vehicle, and
- a frame rack (156) designed for transporting the rotor blade (110) on a transport vessel, wherein the transport frame (134) is receivable in the frame rack (156) so that the rotor blade (110) mounted on the transport frame (134) is transportable by means of the transport vessel,
wherein the transport frame (134) comprises an upper horizontal portion (138) having mounting means (142) for connecting to an upper half (144) of the rotor blade root connection (130), and a lower horizontal portion (140) having mounting means (142) for connecting to a lower half (146) of the rotor blade root connection (130), the mounting means (142) being designed to be connected to the rotor blade root connection (130) only in a partial area of the respective half (144, 146), and
wherein the mounting means (142) of the upper and lower horizontal portions (138, 140) are designed in a comb-like manner and are opened upwardly in proper use so that transport bolts (132) or blade bolts (131) arranged at the rotor blade root connection (130) can be received.

2. The modular support system (162) according to claim 1, wherein the frame rack (156) is box-shaped formed by a plurality of frame members (136), and the transport frame (134) is formed by a plurality of frame members (136), the frame members (136) being arranged substantially in a plane (137) .

3. The modular support system (162) according to claim 1 or 2, wherein the frame rack (156) and the transport frame (134) have substantially the same overall height (141).

4. The modular support system (162) according to any of the preceding claims, wherein the transport frame (134) comprises fastening means designed for fastening the transport frame (134) to the transport vehicle as well as for fastening the transport frame (134) to the frame rack (156).

5. The modular support system (162) according to claim 4, wherein the fastening means are designed as opposite, laterally protruding bolts (154) which are insertable into cylindrical receiving means (160) of the frame rack (156) which correspond to the bolts and are open upwards in proper use.

6. The modular support system (162) according to claim 4, wherein the fastening means are designed as fastening openings (164) which, in proper use, are formed on the bottom side of the transport frame (134), wherein the fastening openings (164) are arranged to receive corresponding mounting means of the transport vehicle or of the frame rack (156) for positive mounting.

7. The modular support system (162) according to any of the claims 1 to 6, wherein the transport frame (134) is trapezoidal in shape and the upper and lower horizontal portions (138, 140) are connected by means of two frame legs (148) which are arranged at an angle to each other, wherein the upper horizontal portion (138) has a length that is less than 30% of a diameter (139) of the rotor blade root connection (130) and less by at least a factor of 2 compared to the lower horizontal portion (140).

8. The modular support system (162) according to claim 7, wherein the frame legs (148) are arranged asymmetrically with respect to a vertical plane (150) passing through the center (152) of the rotor blade root connection (130).

9. The modular support system (162) according to any of the claims 1 to 8, wherein the mounting means (142) of the lower horizontal portion (140) are arranged asymmetrically with respect to a vertical plane (150) passing through the center point (152) of the rotor blade root connection (130).

10. The modular support system (162) according to any of the preceding claims, wherein the frame rack (156) is designed to be stackable in order to be arranged in a stacked manner with another frame rack (156) of this type.

11. A transport frame (134) for a rotor blade (110), wherein the transport frame (134)
- is designed for supporting a rotor blade (110) of a wind turbine (100),
- is directly connectable to a rotor blade root connection (130) of the rotor blade (110),
- is designed to be attached to a transport vehicle, in particular a truck, so that the rotor blade (110) mounted to the transport frame (134) is transportable by means of the transport vehicle,
- comprises an upper horizontal portion (138) having mounting means (142) for connecting to an upper half (144) of the rotor blade root connection (130), and a lower horizontal portion (140) having mounting means (142) for connecting to a lower half (146) of the rotor blade root connection (130), wherein the mounting means (142) are designed to be connected to the rotor blade root connection (130) only in a partial region of the respective half (144, 146), and wherein the mounting means (142) of the upper and lower horizontal portions (138, 140) are designed in a comb-like manner and are open upwards in proper use, so that transport bolts (132) or blade bolts (131) arranged on the rotor blade root connection (130) can be received, and
- is trapezoidal in shape and the upper and lower horizontal portions (138, 140) are connected by means of two frame legs (148) which are arranged at an angle to each other, wherein the upper horizontal portion (138) has a length that is less than 30% of a diameter of the rotor blade root connection (130) and less by at least a factor of 2 compared to the lower horizontal portion (140).

12. The transport frame (134) according to claim 11,
wherein the transport frame (134) is designed for use in a modular support system (162) according to any of the claims 1 to 10.

## Revendications

1. Système de maintien modulaire (162) pour le transport d'une pale de rotor (110) d'une éolienne (100), présentant
- un cadre de transport (134) destiné à maintenir la pale de rotor (100), qui est directement reliable à un raccord de pale de rotor (130) de la pale de rotor (110), sachant que le cadre de transport (134) est constitué pour être fixé à un véhicule de transport, en particulier à un camion, de telle sorte que la pale de rotor (110) montée au niveau du cadre de transport (134) soit transportable moyennant le véhicule de transport, et
- un bâti de cadre (156) qui est constitué pour le transport de la pale de rotor (110) sur un bateau de transport, sachant que le cadre de transport (134) peut être logé dans le bâti de cadre (156) de telle sorte que la pale de rotor (110) montée au niveau du cadre de transport (134) soit transportable moyennant le bateau de transport,
sachant que le cadre de transport (134) présente une section horizontale supérieure (138) qui présente des moyens de montage (142) pour la liaison avec une moitié supérieure (144) du raccord de pale de rotor (130), et une section horizontale inférieure (140) qui présente des moyens de montage (142) pour la liaison avec une moitié inférieure (146) du raccord de pale de rotor (130), sachant que les moyens de montage (142) sont constitués pour être reliés au raccord de pale de rotor (130) seulement dans une zone partielle de la moitié (144, 146) respective, et
sachant que les moyens de montage (142) des sections horizontales supérieure et inférieure (138, 140) sont constitués en forme de peigne et sont ouverts vers le haut dans un usage conforme à la destination prévue de telle sorte que des boulons de transport (132) ou des boulons de pale (131) disposés au niveau du raccord de pale de rotor (130) puissent être logés.

2. Système de maintien modulaire (162) selon la revendication 1, sachant que le bâti de cadre (156) est constitué en forme de caisson par plusieurs éléments de cadre (136) et le cadre de transport (134) est constitué par plusieurs éléments de cadre (136) qui sont disposés sensiblement dans un plan (137).

3. Système de maintien modulaire (162) selon la revendication 1 ou 2, sachant que le bâti de cadre (156) et le cadre de transport (134) présentent sensiblement une même hauteur de construction (141).

4. Système de maintien modulaire (162) selon l'une des revendications précédentes, sachant que le cadre de transport (134) présente des moyens de fixation qui sont constitués pour la fixation du cadre de transport (134) au véhicule de transport ainsi que pour la fixation du cadre de transport (134) au bâti de cadre (156).

5. Système de maintien modulaire (162) selon la revendication 4, sachant que les moyens de fixation sont constitués comme boulons (154) opposés dépassant latéralement qui peuvent être insérés dans des moyens de logement (160) du bâti de cadre (156) qui sont de forme cylindrique, correspondants aux boulons et ouverts vers le haut dans un usage conforme à la destination prévue.

6. Système de maintien modulaire (162) selon la revendication 4, sachant que les moyens de fixation sont constitués comme ouvertures de fixation (164) qui sont constituées au niveau du côté inférieur du cadre de transport (134) dans un usage conforme à la destination prévue, sachant que les ouvertures de fixation (164) sont configurées pour loger des moyens de montage correspondants du véhicule de transport ou du bâti de cadre (156) pour un montage par complémentarité de forme.

7. Système de maintien modulaire (162) selon l'une des revendications 1 à 6, sachant que le cadre de transport (134) est constitué en forme de trapèze et en outre les sections horizontales supérieure et inférieure (138, 140) sont reliées via deux équerres de cadre (148) disposées angulairement l'une par rapport à l'autre, sachant que la section horizontale supérieure (138) présente une longueur qui est inférieure à 30 % d'un diamètre (139) du raccord de pale de rotor (130) et est moindre d'au moins un facteur 2 en comparaison avec la section horizontale inférieure (140).

8. Système de maintien modulaire (162) selon la revendication 7, sachant que les équerres de cadre (148) sont disposées asymétriquement par rapport à un plan vertical (150) passant par le point médian (152) du raccord de pale de rotor (130).

9. Système de maintien modulaire (162) selon l'une des revendications 1 à 8, sachant que les moyens de montage (142) de la section horizontale inférieure (140) sont disposés asymétriquement par rapport à un plan vertical (150) passant par le point médian (152) du raccord de pale de rotor (130).

10. Système de maintien modulaire (162) selon l'une des revendications précédentes, sachant que le bâti de cadre (156) est constitué de manière empilable pour être disposé de manière empilée avec un autre tel bâti de cadre (156).

11. Cadre de transport (134) pour une pale de rotor (110), sachant que le cadre de transport (134)
- est constitué pour maintenir une pale de rotor (110) d'une éolienne (100),
- est directement reliable à un raccord de pale de rotor (130) de la pale de rotor (110),
- est constitué pour être fixé à un véhicule de transport, en particulier à un camion, de telle sorte que la pale de rotor (110) montée au niveau du cadre de transport (134) soit transportable moyennant le véhicule de transport,
- présente une section horizontale supérieure (138) qui présente des moyens de montage (142) pour la liaison avec une moitié supérieure (144) du raccord de pale de rotor (130), et une section horizontale inférieure (140) qui présente des moyens de montage (142) pour la liaison avec une moitié inférieure (146) du raccord de pale de rotor (130), sachant que les moyens de montage (142) sont constitués pour être reliés au raccord de pale de rotor (130) seulement dans une zone partielle de la moitié (144, 146) respective, et sachant que les moyens de montage (142) des sections horizontales supérieure et inférieure (138, 140) sont constitués en forme de peigne et sont ouverts vers le haut dans un usage conforme à la destination prévue de telle sorte que des boulons de transport (132) ou des boulons de pale (131) disposés au niveau du raccord de pale de rotor (130) puissent être logés, et
- est constitué en forme de trapèze et en outre les sections horizontales supérieure et inférieure (138, 140) sont reliées via deux équerres de cadre (148) disposées angulairement l'une par rapport à l'autre, sachant que la section horizontale supérieure (138) présente une longueur qui est inférieure à 30 % d'un diamètre (139) du raccord de pale de rotor et est moindre d'au moins un facteur 2 en comparaison avec la section horizontale inférieure (140).

12. Cadre de transport (134) selon la revendication 11, sachant que le cadre de transport (134) est constitué pour l'utilisation dans un système de maintien modulaire (162) selon l'une des revendications 1 à 10.
